# EUROPÄISCHE PATENTSCHRIFT

(11) **EP 3 846 958 B1**
(45) Veröffentlichungstag und Bekanntmachung des Hinweises auf die Patenterteilung: **02.10.2024**
(21) Anmeldenummer: 19753040.5
(22) Anmeldetag: 09.08.2019
(51) Int. Cl.: B23C 3/12, B24B 23/00

(54) **KANTENLÖSWERKZEUG FÜR BLECHE**
EDGE-REMOVING TOOL FOR SHEET METAL
OUTIL DE RETRAIT DE BORD POUR TÔLES

(30) Priorität: 07.09.2018 DE 202018105118 U; 13.11.2018 DE 202018106425 U; 30.04.2019 DE 202019102442 U
(43) Veröffentlichungstag der Anmeldung: 14.07.2021
(73) Patentinhaber: WS Wieländer + Schill Professionelle Karosserie- Spezialwerkzeuge GmbH & Co. KG, 78609 Tuningen (DE)
(72) Erfinder: LAY, Norbert, 71149 Bondorf (DE)
(74) Vertreter: Friderichs, Gunther
(86) Internationale Anmeldenummer: PCT/EP2019/071421
(87) Internationale Veröffentlichungsnummer: WO 2020/048731

(56) Entgegenhaltungen:
- EP-A1- 0 786 301
- WO-A1-2016/170532
- WO-A2-2005/002805
- DE-A1- 3 338 285
- DE-A1- 3 929 733
- JP-A- S61 219 510

## Beschreibung

### Gebiet der Erfindung

Die Erfindung betrifft ein Kantenlöswerkzeug für Bleche, insbesondere für Karosseriebleche, gemäß dem Oberbegriff des Patentanspruchs 1, mittels dessen die Kante eines gefalteten oder zusammengefügten Blechpakets abgetrennt werden kann.

### Hintergrund der Erfindung

Bei Reparaturarbeiten an Fahrzeugen ist es oft erforderlich, die Kante eines gefalteten Bleches oder eines zusammengefügten Blechpaketes zu entfernen, um ein beschädigtes Blechteil, wie beispielsweise eine Seitenwand einer Karosserie, entfernen zu können. Derartige gefaltete oder zusammengefügte Kanten befinden sich insbesondere im Bereich der Kotflügel sowie an Tür-, Kofferraum- und Motorhaubenkanten.

Das Abtrennen einer schmalen Kante im Millimeterbereich ist mittels einer Säge meist kaum möglich. In der Praxis wird daher vor allem auf abrasive Methoden, insbesondere unter Verwendung eines Winkelschleifers, zurückgegriffen. Ein Winkelschleifer lässt sich aber nur schwer exakt an der Blechkante entlangfahren.

Das Abtrennen von Blechkanten ist daher umständlich und zieht die Gefahr nach sich, dass Karosseriesubstanz, welche erhalten werden soll, unbeabsichtigt beschädigt wird. Fräswerkzeuge mit einer Führung sind aus den Dokumenten DE 33 38 285 A, JP S61 219 510 A DE 39 29 733 A, EP 789 301 A, WO 2005/002805 A und WO 2016/170532 A bekannt.

Dokument DE 33 38 285 offenbart ein Kantenlöswerkzeug, gemäß dem Oberbegriff des Patentanspruchs 1.

### Aufgabe der Erfindung

Der Erfindung liegt demgegenüber die Aufgabe zugrunde, eine Vorrichtung bereitzustellen, mittels welcher sich Kanten von gefalteten und/oder zusammengefügten Blechen auf einfache Weise und mit hoher Präzision entfernen lassen.

### Zusammenfassung der Erfindung

Die Aufgabe der Erfindung wird durch ein Kantenlöswerkzeug für Bleche nach Anspruch 1 gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft ein Kantenlöswerkzeug für Bleche und andere Karosseriematerialen. Unter einem Kantenlöswerkzeug wird ein Werkzeug verstanden, mittels dessen die Kante eines gefalteten Bleches oder mittels dessen die Kante eines zusammengefügten, insbesondere zusammengeschweißten Blechpakets entfernt werden kann. Die Erfindung eignet sich für alle Arten von Blechen. Auch eignet sich das erfindungsgemäße Kantenlöswerkzeug für andere Materialen, insbesondere für Faserverbundwerkstoffe, wie z.B. CFK und GFK.

Das Kantenlöswerkzeug umfasst einen Kopf mit einem rotierenden Spanwerkzeug.

Das Spanwerkzeug ist als Fräser ausgebildet.

Der Kopf ist vorzugsweise an einem pneumatisch oder elektrisch angetriebenen Antrieb angeordnet, wobei das rotierende Spanwerkzeug mit der Antriebswelle des Antriebs verbunden ist.

Gemäß der Erfindung umfasst der Kopf zumindest eine Führung für eine Kante, insbesondere für eine Blechkante.

Gemäß der Erfindung ist also unmittelbar am Werkzeugkopf eine Führung angeordnet, mit welcher das erfindungsgemäße Kantenlöswerkzeug entlang der Blechkante gefahren werden kann.

Durch die Führung wird zum einen für den Benutzer das Entlangführen an der Kante erleichtert. Zum anderen wird durch die Führung die Eindringtiefe des rotierenden Spanwerkzeugs begrenzt.

Die Führung ist insbesondere als Nut, vorzugsweise mit dreieckförmigem Querschnitt ausgebildet.

Gemäß der Erfindung umfasst der Kopf eine Hülse mit der Führung.

Die Hülse schließt sich insbesondere axial ausgerichtet an die Antriebswelle an und umgibt das rotierende Spanwerkzeug.

Die Führung befindet sich gemäß der Erfindung stirnseitig an der Hülse.

Gemäß der Erfindung umfasst der Kopf sowohl stirnseitig als auch seitlich jeweils eine Führung.

Über zwei unterschiedliche Führungen, wobei das rotierende Spanwerkzeug einmal mit der Stirnseite und einmal mit der Seite Material abträgt, lässt sich das Werkzeug in verschiedenen Positionen verwenden.

Gleichzeitig ist es möglich, zwei unterschiedliche Führungen bereitzustellen, insbesondere eine Führung, die vorzugsweise ausgebildet ist, eine miteinander verbundene Blechpaarung zu lösen und eine weitere Führung, die dazu ausgebildet ist, die Kante an einer gefalteten Verbindung zu entfernen.

Der Kopf umfasst eine Außenhülse mit einer ersten Anlagefläche für ein Blech sowie eine Innenhülse mit einer zweiten Anlagefläche für ein Blech, wobei sich zwischen den Anlageflächen eine seitliche Öffnung für das rotierende Spanwerkzeug erstreckt.

Die Innenhülse ist gemäß der Erfindung axial gegenüber der Außenhülse verschiebbar.

Durch das Verschieben von Innen- und Außenhülse kann der Abstand der Anlageflächen verändert werden.

So ist es auf einfache Weise möglich, das Werkzeug hinsichtlich der Eindringtiefe gefalteten Blechkanten anzupassen, welche einen unterschiedlichen Winkel zueinander einnehmen.

Insbesondere können Kanten entfernt werden, bei denen die Bleche einen Winkel von mehr als 60°, vorzugsweise mehr als 80° zueinander einnehmen.

Bei einer nicht erfindungsgemäßen, alternativen Ausführungsform ist die Außenhülse nicht verschiebbar, sondern fest mit dem Kopfstück verbunden, insbesondere einstückig mit dem Kopfstück ausgebildet.

Bei dieser Ausführungsform wird die Eindringtiefe des Fräsers allein durch die Höhe des Steges bestimmt, der an die seitliche Führung angrenzt. Vorzugsweise hat der Steg gegenüberliegende Anlageflächen.

Der Steg umfasst bei einer Weiterbildung eine Stufe, durch welche zumindest zwei unterschiedliche Eindringtiefen bereitgestellt werden.

Die Anlageflächen sind vorzugsweise gegenüber der Mittelachse des Spanwerkzeugs geneigt, insbesondere in einem Winkel von 45° +/- 30°, bevorzugt +/-10° (also zwischen 15° und 75°, bzw. 35° und 55°) .

Um zwei Führungen bereitzustellen, kann die Außenhülse stirnseitig eine Führung, insbesondere eine Nut oder eine Stufe, aufweisen.

Gemäß der Erfindung ist das Spanwerkzeug als Walzenstirnfräser, vorzugsweise mit kreiszylindrischem Querschnitt ausgebildet. Walzenstirnfräser haben auch auf der Stirnseite Schneiden und eignen sich daher auch zum Stirn-Umfangsfräsen. So kann mit dem Werkezeug sowohl stirnseitig als auch umfangsseitig Material abgetragen werden.

Insbesondere bei einer Ausführungsform der Erfindung, bei welcher die Hülse auf einer Seite offen ist, kann durch die stirnseitige Kante des Walzenstirnfräsers auch eine Nut in ein glattes Blech wie bei einer Oberfräse geschnitten werden.

Die Außenhülse ist gegenüber der Innenhülse axial verschiebbar, so dass der Abstand der ersten Anlagefläche von der zweiten Anlagefläche veränderbar ist.

Vorzugsweise sind erste und zweite Anlagefläche konisch, insbesondere kegelstumpfförmig, ausgebildet.

Wie bereits vorstehend beschrieben, lässt sich so das Werkzeug auf sehr einfache Weise zum Abtrennen von Blechkanten an einem Falz auf den Winkel der zueinanderstehenden Blechkanten einrichten.

Hierzu ist gemäß der Erfindung die Außenhülse gegenüber der Innenhülse festlegbar, beispielsweise mittels einer Schraube, insbesondere mittels einer werkzeuglos betätigbaren Schraube, wie beispielsweise einer Rädelschraube.

Die Außenhülse kann auf der der ersten Anlagefläche gegenüberliegenden Seite eine weitere Anlagefläche umfassen.

In einem vollständig nach vorne gefahrenen Zustand der Außenhülse bildet so diese weitere Anlagefläche sodann die Anlagefläche aus, auf welcher das Blech bei Benutzung aufliegt.

In diesem Zustand eignet sich das Werkzeug insbesondere zum Lösen von Blechfalzen, bei denen die Bleche einen Winkel von 0° bis 90° oder mehr zueinander einnehmen.

### Kurzbeschreibung der Zeichnung

Der Gegenstand der Erfindung soll im Folgenden, bezugnehmend auf ein anhand der Zeichnungen Fig. 1 bis Fig. 15 dargestelltes Ausführungsbeispiel, näher erläutert werden.
Fig. 1 ist eine Seitenansicht eines erfindungsgemäßen Kantenlöswerkzeugs.
Fig. 2 ist eine Ansicht des für das Kantenlöswerkzeug verwendeten Fräsers.
Fig. 3 ist eine perspektivische Ansicht des Kopfes des Werkzeugs.
Fig. 4 ist eine Detailansicht.
Fig. 5 ist eine weitere perspektivische Ansicht des Kopfes.
Fig. 6 und Fig. 7 sind perspektivische Ansichten der äußeren Hülse des Kopfes.
Fig. 8 und Fig. 9 sind perspektivische Ansichten des Kopfes mit abgenommener Außenhülse.
Fig. 10 bis Fig. 13 zeigen eine nicht erfindungsgemäße, alternative Ausführungsform eines Kantenlöswerkzeugs, bei welchem die Außenhülse nicht verschiebbar ausgebildet ist.

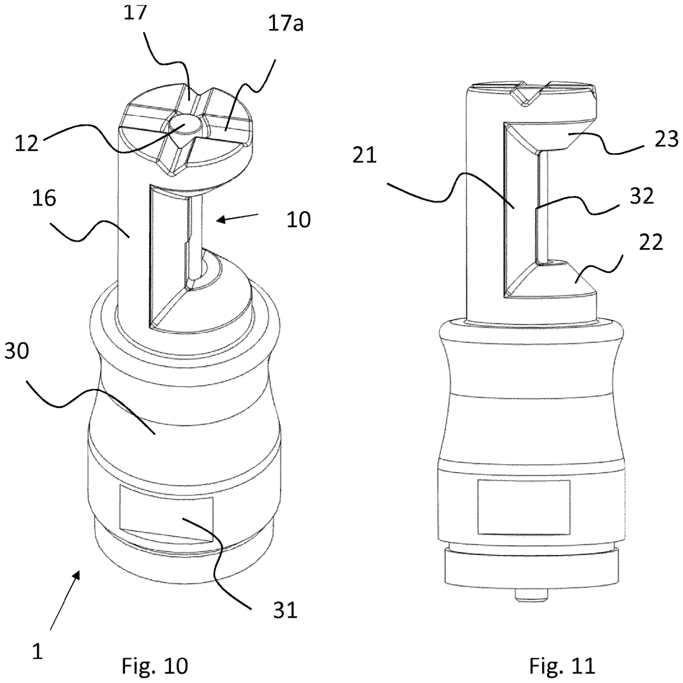

Fig. 10 bis Fig. 12 sind verschiedene perspektivische Ansichten.

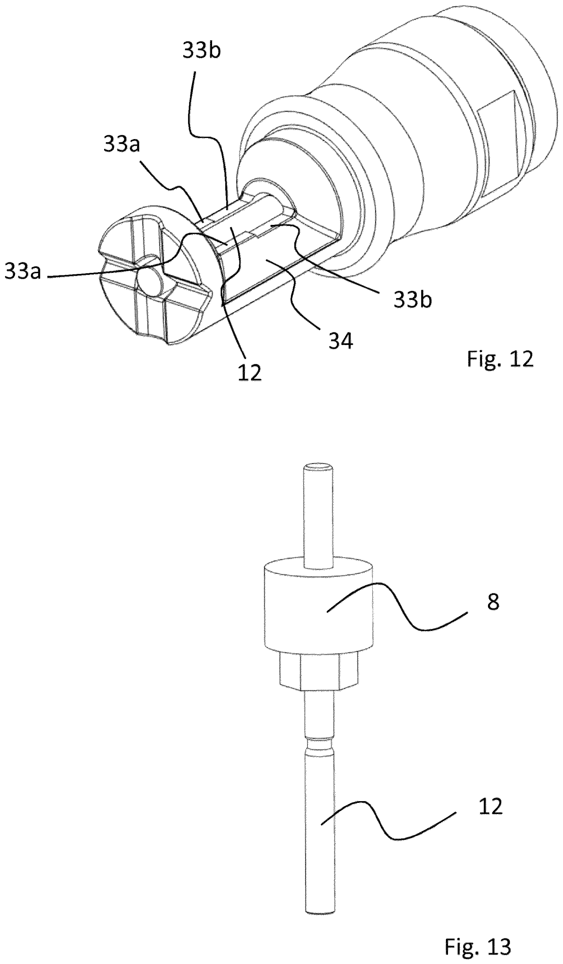

Fig. 13 zeigt das Werkzeug mit ausgeblendetem Kopfstück.

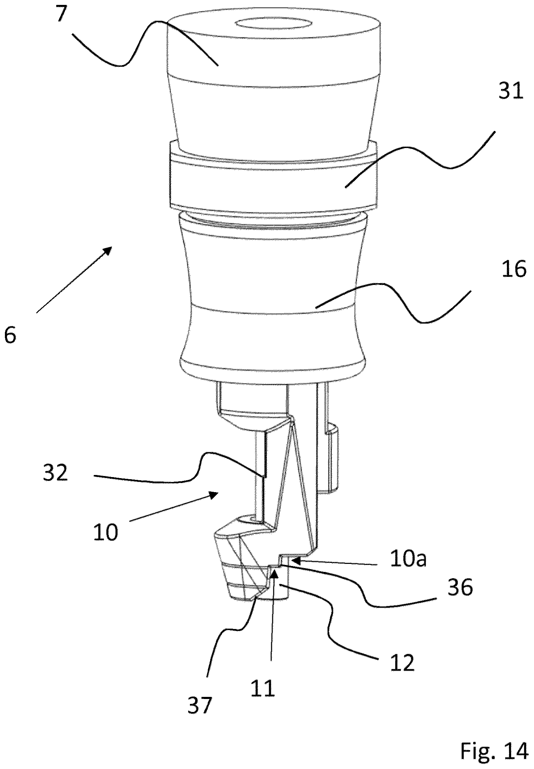

Fig. 14 zeigt eine weitere Ausführungsform eines Kantenlöswerkzeugs in einer perspektivischen Ansicht.

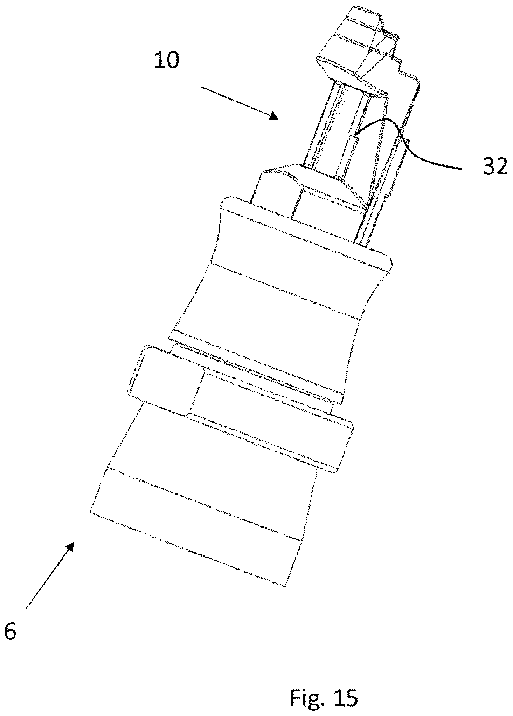

Fig. 15 ist eine weitere perspektivische Ansicht des in Fig. 14 dargestellten Kantenlöswerkzeugs.

### Detaillierte Beschreibung der Zeichnungen

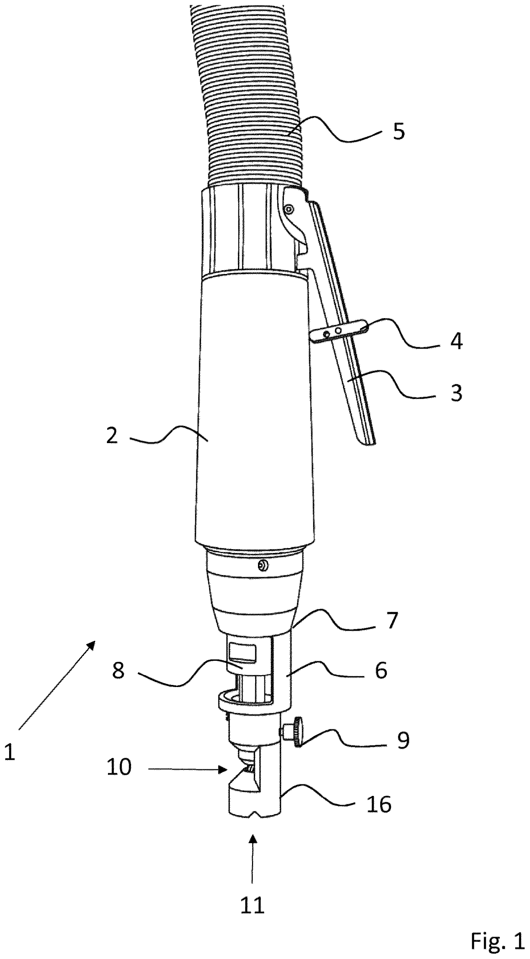

Fig. 1 zeigt in einer Seitenansicht ein Ausführungsbeispiel eines erfindungsgemäßen Kantenlöswerkzeugs 1 für Bleche.

Das Kantenlöswerkzeug 1 umfasst ein Gehäuse 2 mit einem Antrieb.

In diesem Ausführungsbeispiel umfasst das Kantenlöswerkzeug 1 einen Druckluftmotor, der über die Druckluftzufuhr 5 betrieben wird.

Ebenso ist aber auch denkbar, einen elektrisch angetriebenen Antrieb zu verwenden.

Über das Bedienorgan 3, welches in diesem Ausführungsbeispiel seitlich am Gehäuse 2 angeordnet ist, kann das Kantenlöswerkzeug 1 eingeschaltet werden.

In diesem Ausführungsbeispiel umfasst das Bedienorgan 3 eine Sperrklinke 4, die einen Schutz gegen unbeabsichtigte Betätigung darstellt, da diese erst umgelegt werden muss, um das Bedienorgan 3 zu betätigen.

Das Kantenlöswerkzeug 1 umfasst eine axial ausgerichtet in dem Gehäuse 2 angeordnete Antriebswelle, über welche eine Aufnahme 8 für einen Fräser angetrieben wird.

Weiter umfasst das Kantenlöswerkzeug 1 einen Kopf 6, welcher mittels eines Flansch 7 am Gehäuse 2 des Kantenlöswerkzeugs 1 befestigt ist.

Der Kopf 6 ist axial zum Gehäuse 2 ausgerichtet.

Vorne am Kopf 6 befindet sich eine Außenhülse 16, die in diesem Ausführungsbeispiel einen kleineren Durchmesser als der sich daran anschließende Teil des Kopfes 6 aufweist.

Das Kantenlöswerkzeug umfasst eine stirnseitige Führung 11 sowie eine seitliche Führung 10.

Mit den Führungen 10 und 11 kann das Kantenlöswerkzeug in unterschiedlichen Positionen an einer Blechkante entlanggefahren werden, um diese abzutrennen.

Innerhalb des Kopfstücks 6 ist als rotierendes Spanwerkzeug ein Fräser 12 angeordnet, welcher in die insbesondere als Futter ausgebildete Aufnahme 8 eingesetzt ist.

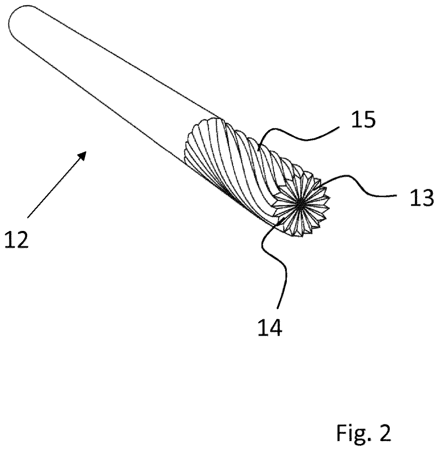

Der Fräser 12 ist in einer perspektivischen Ansicht gemäß Fig. 2 dargestellt.

Es handelt sich bei dem Fräser 12 um einen Walzenstirnfräser, dessen Kopf 13 sowohl Schneiden an der Seite 15 als auch Schneiden an der Stirnseite 14 aufweist.

Der Fräser hat vorzugsweise einen Durchmesser zwischen 5 und 20 mm.

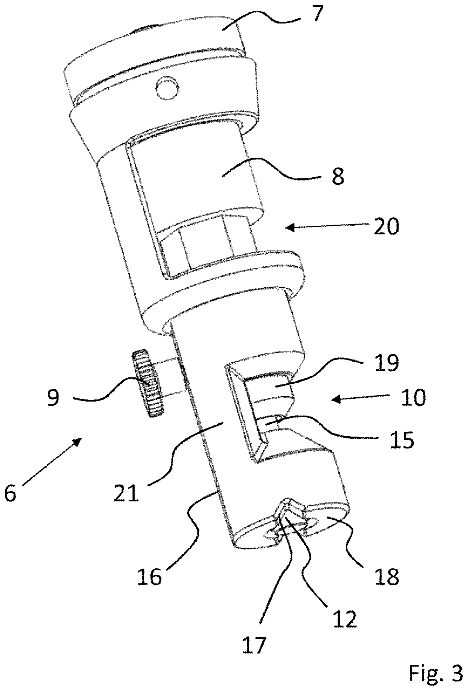

Fig. 3 ist eine perspektivische Ansicht des Kopfes 6.

Der Kopf 6 umfasst den Flansch 7, welcher beispielsweise als Gewinde ausgebildet sein kann, um den Kopf 6 am Gehäuse des Kantenlöswerkzeugs zu befestigen.

In der Aufnahme 8, welche über eine seitliche Öffnung 20 des Kopfes 6 zugänglich ist, ist ein Fräser 12 eingesetzt, der sich axial durch den Kopf 6 erstreckt. Die Aufnahme 8 kann insbesondere als Futter ausgebildet sein, welches durch die Öffnung 20 gelöst werden kann.

Vorne umfasst der Kopf 6 eine in diesem Ausführungsbeispiel im Wesentlichen kreiszylindrisch ausgebildete Außenhülse 16, welche auf einer Innenhülse 19 geführt ist.

Die Außenhülse 16 besteht aus zwei mittels eines Stegs 21 verbundenen Abschnitten, so dass sich seitlich eine Öffnung ergibt, über die die seitliche Führung 10 bereitgestellt wird.

Über die seitlich Führung 10 ist die Seite 15 des Fräsers 12 zugänglich, um eine Blechkante abzutrennen.

Stirnseitig umfasst die Außenhülse 16 die Nut 17, welche in diesem Ausführungsbeispiel einen dreieckförmigen Querschnitt aufweist.

In einer anderen, hier nicht dargestellten Ausführungsform umfasst die Außenhülse 16 stirnseitig eine Mehrzahl von

Nuten. Diese können jeweils eine unterschiedliche Tiefe aufweisen. Die Nuten können sternförmig angeordnet sein. So kann die Eindringtiefe des Fräsers 12 durch Verwendung unterschiedlicher Nuten geändert werden.

Das erfindungsgemäße Kantenlöswerkzeug kann so auch mit seiner Stirnseite an einer Blechkante entlanggefahren werden, wobei die Stirnseite der Außenhülse 16 als stirnseitige Anlagefläche 18 dient. Der Fräser 12 kann so stirnseitig Material abtragen.

Die Außenhülse 16 kann nach Lösen einer Schraube 9 axial verschoben und durch Anziehen der Schraube 9 wieder fixiert werden.

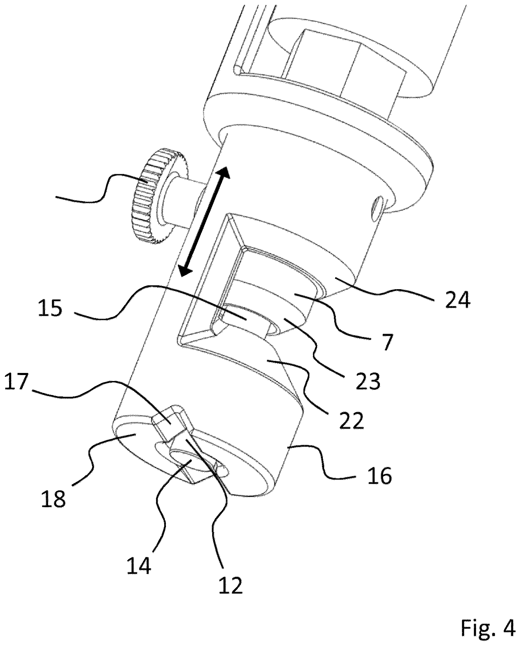

In der Detailansicht gemäß Fig. 4 ist mit einem Pfeil symbolisiert, wie die Außenhülse 16 nach Lösen der vorzugsweise als Rädelschraube ausgebildeten Schraube 9 verschoben werden kann.

Beim Verschieben der Außenhülse 16 verschiebt sich die stirnseitige Nut 17 gegenüber der Stirnseite 14 des Fräsers 12. Da die Anlagefläche 18 auf dem Blech aufliegt, kann so die Eindringtiefe des Fräsers 12 stirnseitig begrenzt werden.

Die stirnseitige Führung ist vor allem zum Entfernen der Kante eines Blechpakets aus zumindest zwei miteinander verbundenen Blechen ausgebildet.

Zum Abtrennen der Kante eines Blechfalzes eignet sich dagegen eher die seitliche Führung.

An der Seite umfasst die Außenhülse 16 eine erste Anlagefläche 22 und die Innenhülse eine zweite Anlagefläche 23.

Die Anlageflächen 22 und 23 stehen schräg zur Rotationsachse des Fräsers 12, insbesondere in einem Winkel von etwa 45°.

In Fig. 4 ist der vollständig eingefahrene Zustand der Außenhülse 16 dargestellt.

Beim Nachvornefahren der Außenhülse 16 vergrößert sich der Abstand der ersten Anlagefläche 22 von der zweiten Anlagefläche 23, welche durch die Innenhülse gebildet wird.

Je weiter die Anlageflächen 22 und 23 auseinandergefahren werden, desto besser ist das Werkzeug von seiner Eindringtiefe her auf einen größer werdenden Winkel des Falzes angepasst, um mittels der Seite 15 des Fräsers 12 die Kante des Falzes abzutrennen.

In diesem Ausführungsbeispiel umfasst die Außenhülse 16 eine weitere der Anlagefläche 22 gegenüberliegende Anlagefläche 24.

Im vollständig ausgefahrenen Zustand (nicht dargestellt) fährt die Anlagefläche 24 über die Anlagefläche 23, so dass nunmehr die sich an einer Kante treffenden Bleche an den Anlageflächen 22 und 24 der Außenhülse anliegen.

Die Neigung der Anlagefläche 24 entspricht in diesem Ausführungsbeispiel in etwa der Neigung der Anlageflächen 23 und 22.

Das erfindungsgemäße Werkzeug ist so kompakt ausgebildet und gleichzeitig geeignet, die Kante von Falzen aufzutrennen, bei welchen die Bleche unterschiedliche Winkel einnehmen.

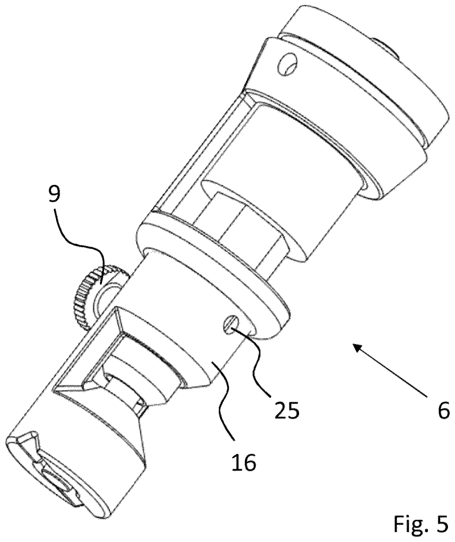

Fig. 5 zeigt in einer weiteren perspektivischen Ansicht des Kopf 6.

Auf der der Schraube 9 gegenüberliegenden Seite der Außenhülse 16 ist eine Madenschraube 25 vorgesehen, welche als zusätzliche Führung dient und verhindert, dass das Werkzeug nach vollständigem Lösen der Schraube 9 auseinanderfällt.

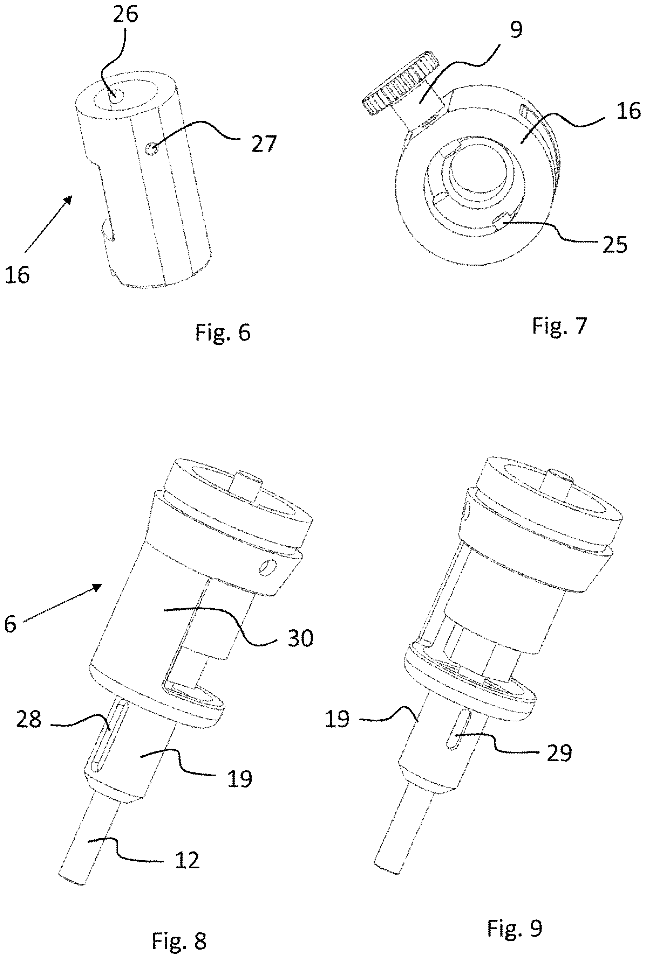

Fig. 6 ist eine perspektivische Ansicht der Außenhülse 16.

Die Außenhülse 16 umfasst ein erstes Gewinde 26 für die Schraube zum Lösen und Verschieben der Außenhülse sowie ein zweites Gewinde 27 für eine Madenschraube 25.

Fig. 7 ist eine weitere perspektivische Ansicht der Außenhülse 16, wobei nunmehr die als Stellorgan dienende Schraube 9, welche aus Rädelschraube ausgebildet ist, sowie die Madenschraube 25 eingesetzt sind

Zu erkennen ist, dass sowohl die Schraube 9 als auch die Madenschraube 25 innenseitig in die Außenhülse 16 hineinragen.

Fig. 8 ist eine perspektivische Ansicht des Kopfes 6 mit abgenommener Außenhülse. Der Kopf 6 umfasst ein an das Werkzeuggehäuse ankoppelbares Kopfstück 30 mit dem Spannfutter für den Fräser 12, aus welchem stirnseitig die Innenhülse 19 herausragt.

Zu erkennen ist weiter, dass stirnseitig aus der Innenhülse 19 der Fräser 12 herausragt.

Die Innenhülse 19 umfasst ein als Nut ausgebildetes Langloch 28, in welches die in Fig. 7 dargestellte Schraube greift.

Entlang dieser Nut ist die Außenhülse axial verschiebbar.

Beim Festziehen der als Stellorgan dienenden Schraube (9 in Fig. 7) kommt diese auf dem Boden des Langlochs 28 zur Anlage, so dass die Außenhülse klemmend festgelegt werden kann.

In der perspektivischen Ansicht gemäß Fig. 9 ist zu erkennen, dass die Außenhülse 19 ein weiteres Langloch 29 aufweist, in welches die Madenschraube (25 in Fig. 7) greift.

Die Madenschraube 25 stellt so im Zusammenwirken mit dem Langloch 29 eine weitere Führung bereit.

Gleichzeitig ist die Madenschraube 25 nicht ausgebildet, um vom Benutzer geöffnet oder festgezogen zu werden.

Sofern der Benutzer die als Stellorgan dienende Schraube 9 derart herausdreht, dass diese nicht mehr in das Langloch 28 greift, wird über die in dem Langloch 29 geführte und vorne im Langloch 29 zur Anlage kommende Madenschraube 25 verhindert, dass sich die Außenhülse vom Kopf löst.

Bezugnehmend auf Fig. 10 bis Fig. 13 soll eine nicht erfindungsgemäße, alternative Ausführungsform näher erläutert werden, bei welcher im Unterschied zu der in Fig. 1 bis 9 beschriebenen Ausführungsform das Kantenlöswerkzeug 1 keine axial verschiebbare Außenhülse aufweist.

Fig. 10 ist eine perspektivische Ansicht des Kantenlöswerkzeugs.

Im Unterschied zu der in Fig. 1 bis Fig. 9 dargestellten Ausführungsform umfasst das Kantenlöswerkzeug 1 stirnseitig zwei Nuten 17, 17a. Die Nuten 17, 17a laufen sternförmig aufeinander zu und stellen unterschiedliche Eindringtiefen bereit.

In diesem Ausführungsbeispiel ist die Nut 17 mit einem dreieckigen Profil ausgebildet, wohingegen die Nut 17a hohlkehlförmig ausgebildet ist.

Weiter ist im Unterschied zu dem Ausführungsbeispiel gemäß Fig. 1 bis Fig. 9 die Außenhülse 16 nicht verstellbar ausgebildet, sondern einstückig mit dem Kopfstück 30 ausgestaltet.

Es wird so eine seitliche Führung 10 bereitgestellt, bei welcher die Eindringtiefe nicht durch Verstellen der Außenhüse 16 veränderbar ist.

Vielmehr umfasst in diesem Ausführungsbeispiel der Steg 21 eine zwischen den Anlageflächen 22 und 23 liegende Stufe 32, über die zwei unterschiedliche Eindringtiefen bereitgestellt werden.

In der perspektivischen Ansicht gemäß Fig. 12 ist zu erkennen, dass durch die Stufen im Wesentlichen ebene Anlageflächen 33a, 33b gebildet werden, die die Eindringtiefe des Fräsers 12 begrenzen.

Angrenzend zu den Anlageflächen 33a, 33b umfasst der Steg abgeschrägte Anlageflächen 34.

Weiter hat das in Fig. 10 bis 13 dargestellte Werkzeug, wie insbesondere in Fig. 10 zu erkennen ist, keinen Kopf 30 mit einer seitlichen Öffnung zur Fräseraufnahme.

Vielmehr umfasst der Kopf 30 ein Eingriffprofil 31, welches in diesem Ausführungsbeispiel als Abflachung zum Eingriff eines Gabelschlüssels ausgebildet ist.

So kann der Kopf 30 unabhängig vom Fräser am Gehäuse des Werkzeugs befestigt werden.

Fig. 13 ist eine Ansicht mit ausgeblendetem Kopfstück.

Der Fräser 12 ist in die Fräseraufnahme 8 eingesetzt, welche unmittelbar mit der Antriebswelle verbunden ist.

Das Kopfstück kann nunmehr nach Montage des Fräsers 12 einfach aufgeschoben und an dem Gehäuse (2 in Fig. 1) festgeschraubt werden.

Die in Fig. 10 bis 13 dargestellte Ausführungsform ist einfacher ausgebildet und es kann auf ein Verstellen der Hülse verzichtet werden.

Auf der anderen Seite wird durch die in Fig. 10 bis 13 dargestellte Ausführungsform nur ein Kantenlöswerkzeug bereitgestellt, bei welchem die Eindringtiefe nicht verstellbar ist, sondern durch die Anschläge festgelegt ist.

Fig. 14 zeigt eine weitere Ausführungsform eines Kantenlöswerkzeugs in einer perspektivischen Ansicht. Der Kopf 6 wird über den Flansch 7 mit dem in Fig 1 dargestellten Gehäuse gekoppelt.

Bei dieser Ausführungsform der Erfindung ist die Außenhülse 16 axial verschiebbar, indem diese mit einem Innengewinde auf eine Innenhülse geschraubt ist.

Über eine Kontermutter 35 kann die Außenhülse 16 vom Benutzer in der gewünschten Position festgelegt werden.

Die seitliche Führung 10 umfasst entsprechend der Ausgestaltung des in Fig. 10 bis Fig. 13 gezeigten Kantenlöswerkzeugs eine Stufe 32, um zwei unterschiedliche Schnitttiefen bereitzustellen.

Stirnseitig umfasst bei dieser Ausführungsform der Erfindung der Kopf 5 eine weitere seitliche Führung 10a sowie die stirnseitige Führung 11.

Hierzu ist die Außenhülse 16 auf einer Seite randseitig offen, so dass das die zu bearbeitende Blechkante seitlich den Fräser 12 erreichen kann.

So kann das Werkzeug auch an der glatten Oberseite eines Bleches angesetzt werden, um z.B. wie eine Oberfräse entlang der Oberseite des Bleches eine Trennfuge herzustellen.

Die Begrenzung der Eindringtiefe des Fräsers 12 durch die seitliche Führung 10 stellt dabei ggf. sicher, dass das darunter liegende Bleche oder Strukturteile, wie z.B. Träger, nicht beschädigt werden.

Eine Stufe 36 stellt ein die stirnseitige Führung 11 bereit. Die stirnseitige Führung 11 ist so als Winkel ausgebildet.

Weiter ergibt sich durch die Stufe 36 eine weitere, vordere seitliche Führung 10a, die ebenfalls als Winkel ausgebildet ist.

Eine abschrägte Fläche 37 am stirnseitigen Ende der Außenhülse 11 ermöglicht z.B. das Abrunden von Kanten.

Fig. 15 ist eine weitere perspektivische Ansicht der in Fig. 14 dargestellten Ausführungsform des Kopfes 6 eines Kantenlöswerkzeugs.

In dieser Ansicht ist zu erkennen, dass die Stufe 32 der seitlichen Führung, im Unterschied zu dem in Fig. 10 bis Fig. 13 dargestellten Kantenlöswerkzeug, nur auf einer Seite vorhanden ist.

Dies hat den Vorteil, dass der Benutzer nur die mit der Stufe 32 versehene Seite des Kopfes 6 beim Benutzen des Werkzeugs im Auge behalten muss. Die Seite ohne Stufe kann auf dem aufgesetzt bleiben, ohne dass der Benutzer darauf achten muss, an welcher Stelle der seitlichen Führung 10 das Blech anliegt. Vielmehr ist die einzige Stufe 32 auf einer Seite der seitlichen Führung 10 für eine Tiefeneinstellung ausreichend. Das Werkzeug lässt sich so leichter führen.

Durch die Erfindung konnte ein einfach zu bedienendes Werkzeug bereitgestellt werden, mittels dessen mit hoher Präzision Kanten sowohl an Falzen als auch an Blechverbindungen gelöst werden können.

### Bezugszeichenliste

- 1: Kantenlöswerkzeug
- 2: Gehäuse mit Antrieb
- 3: Betätigungsorgan
- 4: Sperrklinke
- 5: Druckluftzufuhr
- 6: Kopf
- 7: Flansch
- 8: Aufnahme für Fräser
- 9: Schraube
- 10: seitliche Führung
- 10a: weitere seitliche Führung
- 11: stirnseitige Führung
- 12: Fräser
- 13: Kopf des Fräsers
- 14: Stirnseite des Fräsers
- 15: Seite
- 16: Außenhülse
- 17,: 17a Nut
- 18: stirnseitige Anlagefläche
- 19: Innenhülse
- 20: seitliche Öffnung
- 21: Steg
- 22: erste Anlagefläche
- 23: zweite Anlagefläche
- 24: weitere Anlagefläche
- 25: Madenschraube
- 26: Gewinde
- 27: Gewinde
- 28: Langloch
- 29: Langloch
- 30: Kopfstück
- 31: Eingriffprofil
- 32: Stufe
- 33a,b: Auflagefläche
- 34: abgeschrägte Fläche
- 35: Kontermutter
- 36: Stufe
- 37: abgeschrägte Fläche

## Patentansprüche

1. Kantenlöswerkzeug (1), insbesondere für Bleche, umfassend einen Kopf (6) mit einem rotierenden Spanwerkzeug, welches als Fräser (12) ausgebildet ist, wobei der Kopf stirnseitig eine Außenhülse (16) mit zumindest einer Führung (11) für eine Kante aufweist, und wobei der Fräser (12) als Walzenstirnfräser ausgebildet ist, dessen Kopf (13) sowohl Schneiden an der Seite (15) als auch Schneiden an der Stirnseite (14) aufweist, **dadurch gekennzeichnet, dass** der Kopf (6) sowohl stirnseitig (11) als auch seitlich (10) jeweils eine Führung für eine Kante aufweist, wobei die Außenhülse (16) auf einer Innenhülse (19) geführt ist und wobei die Außenhülse (16) gegenüber der Innenhülse (19) axial verschiebbar ist.

2. Kantenlöswerkzeug (1) nach Anspruch 1, **dadurch gekennzeichnet, dass** die stirnseitige Führung (11) als Nut (17, 17a) oder als Stufe (36) ausgebildet ist.

3. Kantenlöswerkzeug (1) nach einem der vorstehenden Ansprüche, **dadurch gekennzeichnet, dass** das Kantenlöswerkzeug (1) eine seitliche Führung (10) mit einer Stufe (36) aufweist, um Bereiche mit unterschiedlicher Eindringtiefe des rotierenden Spanwerkzeugs bereit zu stellen.

4. Kantenlöswerkzeug (1) nach einem der vorstehenden Ansprüche, **dadurch gekennzeichnet, dass** der Kopf (6) die Außenhülse (16) mit einer ersten Anlagefläche (22) für ein Blech sowie die Innenhülse (19) mit einer zweiten Anlagefläche (23) umfasst, wobei sich zwischen den Anlageflächen eine seitliche Öffnung (20) für das rotierende Spanwerkzeug erstreckt.

5. Kantenlöswerkzeug (1) nach einem der beiden vorstehenden Ansprüche, **dadurch gekennzeichnet, dass** die Außenhülse (16) stirnseitig eine Führung (11), insbesondere eine Nut (17, 17a), aufweist.

6. Kantenlöswerkzeug (1) nach einem der vorstehenden Ansprüche, **dadurch gekennzeichnet, dass** die Hülse stirnseitig auf einer Seite seitlich offen (20) ist.

7. Verwendung eines Kantenlöswerkzeugs (1) nach einem der vorstehenden Ansprüche zum Trennen von Kanten einer gewinkelten und/oder geschweißten Blechverbindung.

## Claims

1. An edge-removing tool (1), in particular for sheet metal, comprising a head (6) with a rotating cutting tool, which is embodied as a milling cutter (12), wherein the head comprises, at its front end, an outer sleeve (16) with at least one guide (11) for an edge, and wherein the milling cutter (12) is embodied as a shell end mill, which head (13) comprises cutting edges on is lateral side (15) as well as cutting edges on its end face (14), **characterized in that** the head (6) has a guide for an edge both on a front end (11) and on a lateral side (10) thereof, wherein the outer sleeve (16) is guided on an inner sleeve (19) and wherein the outer sleeve (16) is axially slideable relative to the inner sleeve (19).

2. The edge-removing tool (1) as claimed in claim 1, wherein the front-end guide (11) is in the form of a groove (17, 17a) or a step (36).

3. The edge-removing tool (1) as claimed in any of the preceding claims, wherein the edge-removing tool (1) has a lateral guide (10) with a step (36) to provide areas with different penetration depths of the rotating cutting tool.

4. The edge-removing tool (1) as claimed in any of the preceding claims, wherein the head (6) comprises the outer sleeve (16) having a first contact surface (22) for a sheet metal and an inner sleeve (19) having a second contact surface (23), with a lateral opening (20) for the rotating cutting tool extending between said contact surfaces.

5. The edge-removing tool (1) as claimed in any of the preceding claims, wherein the outer sleeve (16) comprises a guide (11) at its front end, in particular a groove (17, 17a) .

6. The edge-removing tool (1) as claimed in any of the preceding claims, wherein the outer sleeve (16) opens laterally (20) on one side at its front end.

7. Use of an edge-removing tool (1) according to any of the preceding claims for separating edges of an angled and/or welded sheet metal joint.

## Revendications

1. Outil de dégagement des bords (1), en particulier pour des tôles, comprenant une tête (6) avec un outil de coupe rotatif, qui est conçu comme une fraise (12), la tête présentant sur la face frontale une douille extérieure (16) avec au moins un guide (11) pour un bord, et la fraise (12) étant conçue comme une fraise cylindrique en bout, dont la tête (13) présente aussi bien des arêtes de coupe sur le côté (15) que des arêtes de coupe sur la face frontale (14), **caractérisé en ce que** la tête (6) présente, aussi bien sur la face frontale (11) que sur le côté (10), respectivement un guide pour un bord, la douille extérieure (16) étant guidée sur une douille intérieure (19), et la douille extérieure (16) pouvant être déplacée axialement par rapport à la douille intérieure (19).

2. Outil de dégagement des bords (1) selon la revendication 1, **caractérisé en ce que** le guide sur la face frontale (11) est réalisé sous forme de rainure (17, 17a) ou de palier (36).

3. Outil de dégagement des bords (1) selon l'une des revendications précédentes, **caractérisé en ce que** l'outil de dégagement des bords (1) comprend un guide latéral (10) avec un palier (36) pour fournir des zones avec une profondeur de pénétration différente de l'outil de coupe rotatif.

4. Outil de dégagement des bords (1) selon l'une des revendications précédentes, **caractérisé en ce que** la tête (6) comprend la douille extérieure (16) avec une première surface d'appui (22) pour une tôle, ainsi que la douille intérieure (19) avec une deuxième surface d'appui (23), une ouverture latérale (20) pour l'outil de coupe rotatif s'étendant entre les surfaces d'appui.

5. Outil de dégagement des bords (1) selon l'une des deux revendications précédentes, **caractérisé en ce que** la douille extérieure (16) présente sur sa face frontale un guide (11), en particulier une rainure (17, 17a).

6. Outil de dégagement des bords (1) selon l'une des revendications précédentes, **caractérisé en ce que** la douille est ouverte latéralement (20) sur un côté frontal.

7. Utilisation d'un outil de dégagement des bords (1) selon l'une des revendications précédentes, permettant de séparer les bords d'un assemblage de tôles coudées et/ou soudées.
